# EUROPEAN PATENT SPECIFICATION

(11) **EP 0 651 168 B1**
(45) Date of publication and mention of the grant of the patent: **09.04.1997**
(21) Application number: 94850166.3
(22) Date of filing: 27.09.1994
(51) Int. Cl.: F16C 33/54, F16C 33/52, F16C 23/08, F16C 33/66

(54) **Spherical roller bearing**
Pendelrollenlager
Palier sphérique à rouleaux

(30) Priority: 28.10.1993 SE 9303538
(43) Date of publication of application: 03.05.1995
(73) Proprietor: AB SKF, S-415 50 Göteborg (SE)
(72) Inventor: Kellström, Magnus, S-433 41 Partille (SE); Fogelström, Joacim, S-427 35 Billdal (SE)

(56) References cited:
- EP-A- 0 225 975
- DE-A- 4 240 770
- DE-U- 8 702 071
- US-A- 3 022 125

## Description

The present invention refers to a multirow, spherical roller bearing incorporating an inner race ring, an outer race ring with a substantially spherical race track, at least two rows of rollers, a cage for each row of rollers and a guiding ring provided between the rows of rollers, whereby each cage incorporates a first radially outwardly extending flange, a second radially inwardly extending flange and a number of webs extending between said flanges, which webs form boundaries for roller pockets, whereby said webs have an extension which is mainly parallel to the axes of the adjacent rollers and are situated between the bearing axis and the roller axis.

A bearing of this type is shown in EP-B-0 225 975 and DE-A-4 240 770. The cages in this bearing are guided by the inner race ring or by the rollers and the guiding ring is guided by the cages. When compared to a bearing of the type known from DE-K-8 702 071 wherein the cage webs are arranged substantially in level with the axes of the rollers, a bearing of this type can accomodate a larger number of rollers and/or longer rollers with bigger diameter, whereby the carrying capacity of the bearing is increased. Such a bearing operates extremely well in most assemblies except e.g. in shaking sieves and other vibrating assemblies. At spherical bearings intended for such applications the guiding ring is centered either against the race track of the outer race ring or against the inner race ring, depending on the size of the bearing. At these known embodiments the webs of the cages are arranged substantially in level with the axes of the rollers.

The present invention intends to provide a spherical roller bearing having the same advantages as the bearing shown in EP-B-0 225975 and DE-A-4 240 770 but which furthermore is suited for use at vibrating applications. This has been achieved in that the invention has been given the features defined in the following claim.

Hereinafter the invention is described with reference to the accompanying drawings in which an embodiment is shown for exemplifying reasons. It is to be understood that embodiments of the invention can be modified within the scope of the claims.

In the drawings

Fig. 1 shows an axial section through a spherical roller bearing of known design.

Fig. 2 is an axial section through a spherical roller bearing of another known design.

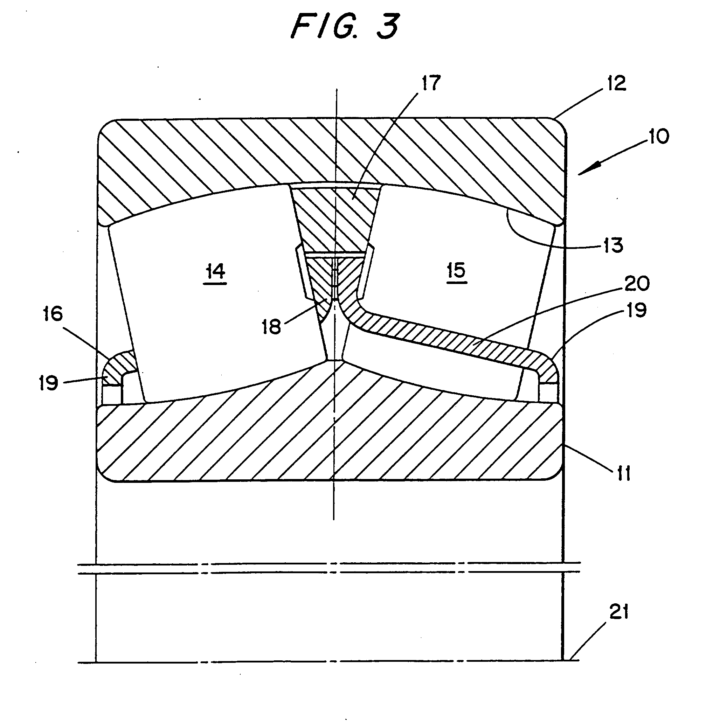

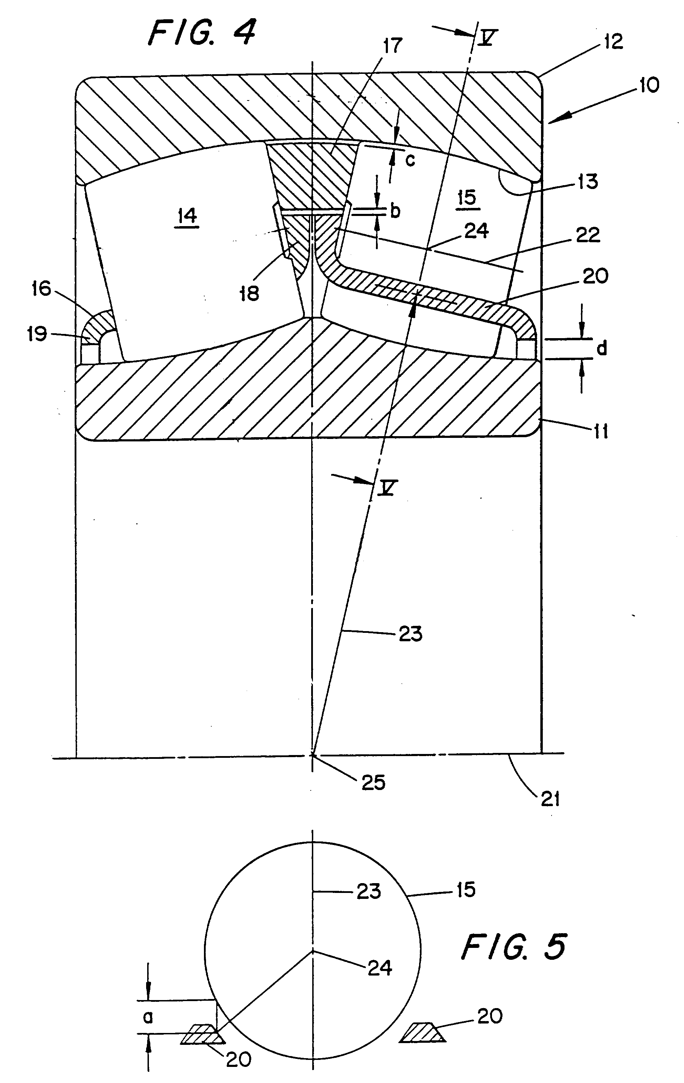

Figs. 3 and 4 show an axial section through a spherical roller bearing according to the invention.

Fig. 5 shows a section along line V-V in Fig. 4.

The parts corresponding to each other has been given the same reference numerals is the different figures.

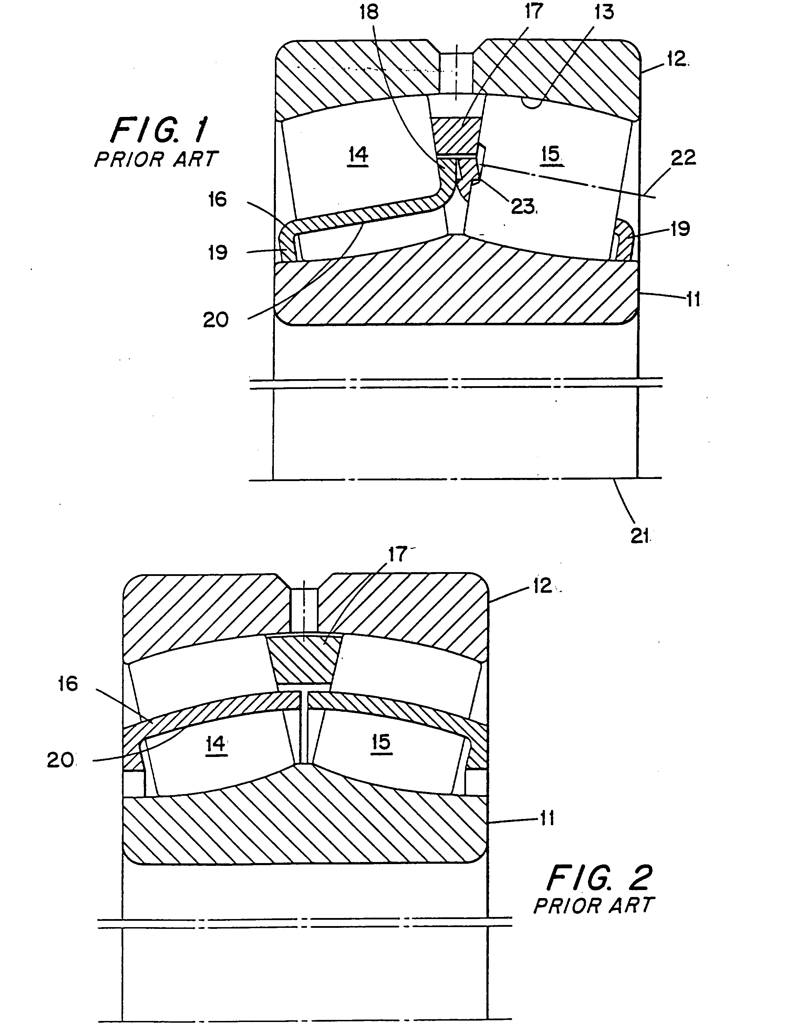

Fig. 1 shows an earlier known spherical roller bearing of the type described in EP-B-0 225 975 and DE-A-4 240 770. This known roller bearing incorporates an inner race ring 11, an outer race ring 12 having a substantially spherical race track 13, two rows of rollers 14, 15, a cage 16 for each row of rollers and a guiding ring 17 provided between the rows of rollers.

The cage 16 incorporates a flange 18 extending radially outwards and a flange 19 extending radially inwards. A number of webs 20 extend between the flanges 18, 19, said webs forming the boundaries of pockets for the rollers 14, 15. The webs have an extension mainly parallel to the axes of the adjacent rollers and are situated between the bearing axis 21 and the axes 22 of the rollers. Thereby the webs will interfere as little as possible on the space whereby a maximum number of rollers can be accomodated in the bearing. The flanges 18, as shown in EP-B-0 225 975, are provided with a projection 23, which is adapted to engage into a recess in the opposed end surface of a roller.

In the earlier known embodiment of the type known from DE-K-8 702 071 and shown in Fig. 2, the cage 16 is provided with webs 20 arranged substantially in level with the axes of the rollers, i.e. at the biggest diameter of the rollers. The guiding ring 17 is arranged to be guided on the race track of the outer race ring 12. As further elucidated in the following part of this specification, this embodiment is intended to be used at vibrating assemblies.

The present invention intends to provide a spherical roller bearing combining the advantages obtained with the earlier known embodiments according to Fig. 1 and 2. The cages 16 are principally designed in the same manner as at the embodiment according to Fig. 1, except for the fact that a clearance d is provided between the flanges 19 and the inner race ring, which clearance shall be big enough to ascertain that the cages will not in any position be guided by the inner race ring 11. The guiding ring 17 is arranged to be guided by the outer race ring 12 and the cages 16 are arranged to be guided by the guiding ring 17 via the flanges 18. Due to the fact that the guiding ring 17 and the cages 16 are guided against the outer race ring 12 there will be obtained low forces acting upon the cages at vibrating applications, such as crank shaft motions. The lubrication between the guiding ring and the outer race ring is furthermore improved at crank shaft motions as compared to the conditions if the cages are guided by the inner race ring. An oil film is thereby created by the relative rolling speed at the contact surface. At a crank shaft motion this rolling speed will become three times as big at the contact surface between the guiding ring and the outer race ring if compared to what it would become at the contact surface between the cages and the inner race ring. As the thickness of the oil film increases with the rolling speed, the oil film will become more than twice as thick at guiding of the guiding ring against the outer race ring as compared to guiding of the cages against the inner race ring.

In order to ascertain guiding of the guiding ring against the outer race ring and guiding of the cages against the guiding ring it is necessary that the bearing is designed thus that it is guaranteed that the cages may not be guided neither by the inner race ring nor by the rollers. A first prerequisite for meeting these two conditions is that the bearing according to the invention is designed thus that a clearance d is arranged to be maintained between the flanges 19 and the inner race ring 11, which clearance is bigger than the sum of the distance c between the guiding ring 17 and the outer race ring 12 and the distance b between the guiding ring 17 and the flanges 18. Another prerequisite for meeting the two above mentioned conditions is that the bearing according to the invention is designed thus that the distance a between a web 20 and a roller 14, 15 in a direction parallel to a line 23 between the centre 24 of the roller 14; 15 and the centre 25 of the bearing is bigger than said sum.

## Claims

1. A multirow spherical roller bearing (10) incorporating an inner race ring (11), an outer race ring (12) with a substantially spherical race track, at least two rows of rollers (14,15), a cage (16) for each row of rollers and a guiding ring (17) disposed between the rows of rollers, whereby each cage incorporates a first radially outwardly extending flange (18), a second radially inwardly extending flange (19) and a number of webs (20) extending between said flanges, which webs form boundaries for roller pockets, whereby said webs extend substantially parallel to the axes (22) of adjacent rollers and are situated between the bearing axis (21) and the roller axes (22),
**characterized therein,**
that the guiding ring (17) is arranged to be guided by the outer race ring (19), that the cages (16) are arranged to be guided by the guiding ring (17) via the outer periphery of said first flanges, and that a clearance (d) is arranged to be maintained between said second flanges (19) and the inner race ring (11), whereby said clearance (d) as well as a first distance (a) between the web (20) and a roller (15) in a direction parallel to a line (23) between the centre (24) of the roller and the centre (25) of the bearing is bigger than the sum of a second distance (c) between the guiding ring (17) and the outer race ring (12) and a third distance (b) between the guiding ring (17) and the first flange (18).

## Patentansprüche

1. Mehrreihiges Pendelrollenlager (10) mit einem inneren Laufring (11), einem äußeren Laufring (12) mit einer im wesentlichen sphärischen Laufbahn, wenigstens zwei Reihen Rollen (14, 15), einem Käfig (16) für jede Reihe Rollen und einem zwischen den Reihen der Rollen angeordneten Führungsring (17), wobei jeder Käfig einen ersten, sich radial auswärts erstreckenden Flansch (18), einen zweiten, sich radial einwärts erstreckenden Flansch (19) und eine Anzahl von sich zwischen den Flanschen erstreckenden Stegen (20) aufweist, die eine Begrenzung für Rollentaschen bilden, sich im wesentlichen parallel zu den Achsen (22) benachbarter Rollen erstrecken und zwischen der Lagerachse (21) und den Rollenachsen (22) angeordnet sind, **dadurch gekennzeichnet**, daß der Führungsring (17) vom äußeren Laufring (19) führbar ist, die Käfige (16) über den Außenumfang der ersten Flansche vom Führungsring (17) führbar sind und eine Spaltweite (d) zwischen dem zweiten Flansch (19) und dem inneren Laufring (11) aufrecht erhalten ist, die, ebenso wie ein erster Abstand (a) zwischen dem Steg (20) und einer Rolle (15) in einer Richtung parallel zu einer Linie (23) zwischen der Mitte (24) der Rolle und der Mitte (25) des Lagers, größer ist als die Summe aus einem zweiten Abstand (c) zwischen dem Führungsring (17) und dem äußeren Laufring (12) und einem dritten Abstand (b) zwischen dem Führungsring (17) und dem ersten Flansch (18).

## Revendications

1. Roulement (10) à rouleaux sphériques et à plusieurs rangées, comprenant une bague intérieure (11), une bague extérieure (12) avec un chemin de roulement sensiblement sphérique, au moins deux rangées de rouleaux (14, 15), une cage (16) pour chaque rangée de rouleaux et une bague de guidage (17) disposée entre les rangées de rouleaux, chaque cage comportant un premier rebord (18) s'étendant radialement vers l'extérieur, un second rebord (19) s'étendant radialement vers l'intérieur, et de nombreuses barrettes (20) s'étendant entre lesdits rebords, ces barrettes formant les limites pour les alvéoles de logement des rouleaux, grâce à quoi lesdites barrettes s'étendent de façon sensiblement parallèle aux axes (22) des rouleaux adjacents et sont situées entre l'axe (21) du roulement et les axes (22) des rouleaux, caractérisé en ce que la bague de guidage (17) est disposée de manière à être guidée par la bague extérieure (19), que les cages (16) sont disposées de manière à être guidées par la bague de guidage (17,) par l'intermédiaire de la périphérie desdits premiers rebords, et qu'un espace libre (d) est agencé de manière à être maintenu entre lesdits seconds rebords (19) et la bague intérieure (11), grâce à quoi ledit espace libre (d) ainsi qu'une première distance (a) entre la barrette (20) et un rouleau (15) dans une direction parallèle à une ligne (23) reliant le centre (24) du rouleau et le centre (15) du roulement sont plus grands que la somme d'une deuxième distance (c) entre la bague de guidage (17) et la bague extérieure (12) et d'une troisième distance (b) entre la bague de guidage (17) et le premier rebord (18).
